# EUROPÄISCHE PATENTANMELDUNG

(11) **EP 1 655 663 A1**
(43) Veröffentlichungstag der Anmeldung: **10.05.2006**
(21) Anmeldenummer: 04026386.5
(22) Anmeldetag: 05.11.2004
(51) Int. Cl.: G06F 9/44

(54) **Datenflussmodellierung in Engineering-Systemen**

(71) Anmelder: SIEMENS AKTIENGESELLSCHAFT, 80333 München (DE)
(72) Erfinder: Denzlein, Michael, 91056 Erlangen (DE)

(57) **Zusammenfassung**

Die Erfindung betrifft eine Vorrichtung und ein Verfahren zur Projektierung einer Bedienoberfläche, insbesondere einer Mensch-Maschine-Schnittstelle einer Automatisierungskomponente. Hierbei wird einem Projekteur die Projektierung einer Bedienoberfläche (6) durch Anzeige der Verbindungen der zu projektierenden Komponenten (11, 22, 33, 44) erleichtert.

## Beschreibung

Die Erfindung betrifft eine Vorrichtung und ein Verfahren zur Projektierung einer Bedienoberfläche, insbesondere einer Mensch-Maschine-Schnittstelle einer Automatisierungskomponente.

Im Automatisierungsbereich werden so genannte Operator-Panels zur Bedienung der automatisierten Anlage bzw. einzelner Maschinen eingesetzt. Bei den Operator-Panels handelt es sich um eigenständige Rechner-Systeme, die über Schnittstellen an Steuerungsrechner (CPUs) angeschlossen sind. Auf den RechnerSystemen arbeitet eine so genannte Runtime-Software, die die Mensch-Maschine-Schnittstelle (Human Machine Interface (HMI)) realisiert. Hierbei ist die Runtime-Software aufgeteilt in einen konstanten Anteil, der in der Regel bereits bei der Fertigung des Operator-Panels aufgespielt wird und in einen dynamischen Anteil, der durch so genannte Engineering-Systeme erzeugt wird. Hierbei weist der dynamische Anteil die spezifische Projektierung des Geräts bzw. der Maschine oder den Anlagenteil für den jeweiligen Fertigungseinsatz auf.

Hierbei ist die Datensicht der Engineering-Systeme Bildschirm-basiert, d.h. die primäre Einheit, in der ein Projekteur die Projektierungen entwirft, ist ein Bildschirm, auf dem einzelne Elemente positioniert werden, z.B. Anzeigen für Prozesswerte oder Navigationselemente. Diese Elemente auf den Bildschirmen sind wiederum mit Einheiten der Prozesssteuerung des Automatisierungssystems verbunden, so z.B. eine Anzeige für eine Temperatur auf dem Bildschirm mit einem entsprechenden Temperatur-Fühler in einem Kessel. Diese Verbindung zwischen der Messwert-Anzeige und dem Messwert-Aufnehmer ist allerdings nie direkt, sondern vielmehr über eine Kette von Objekten realisiert. Beispielsweise besteht die Kette aus dem Anzeigenelement auf dem Bildschirm, einem Variablenobjekt und dem Steuerungsobjekt vor Ort.

Bei der Projektierung platziert ein Projekteur in der Regel einzelne Komponenten zur Visualisierung und Steuerung der Prozessdaten auf dem Bildschirm des Operator-Panels. Die wesentliche Aufgabe des Projekteurs ist es anschließend, Verbindungen zwischen den Komponenten zur Visualisierung und denen zur Datenhaltung und Kommunikation herzustellen. Diese Verbindungsinformation ist dem Projekteur bei heutzutage verwendeten Engineering-Systemen nur sehr verteilt und in kleinen Einheiten zugänglich.

Um Information für eine Kette von der eigentlichen Steuerung zur Datenhaltung zur Visualisierung zu erhalten, sind viele manuelle Schritte an verteilten Stellen im Engineering-System nötig, da die Engineering-Systeme heutzutage in der Regel nur eine schirmbasierte Sicht zur Verfügung stellen. Um die gewünschte Verbindung zwischen den Komponenten herzustellen, ist in der Regel in so genannten Eigenschafts-Dialogen der entsprechenden ausgewählten Elemente das verknüpfte Objekt einzutragen, z.B. in der Messwert-Anzeige die Variable und in der Variable die zugehörige Steuerung und die Speicheradresse. Bei diesen Verschaltungen können relativ leicht Fehler auftreten, wobei der Projekteur meist erst bei der Übersetzung der Projektierung darauf aufmerksam gemacht wird.

Hierbei werden in der Regel jedoch ausschließlich syntaktische Fehler wie eine fehlende Verbindung entdeckt. Semantische Fehler wie z.B. eine Verbindung mit einer falschen Variablen werden vom Projekteur in der Regel erst bei der Inbetriebnahme des entsprechenden Operator-Panels entdeckt. Bei einem semantischen Fehler kommt hinzu, dass der Projekteur nur umständliche Möglichkeiten zu einer Fehlersuche besitzt. So muss er jedes Element, das in Frage kommen könnte, auf dessen Verbindungen prüfen. Das können - je nach Element - bis zu einem Dutzend Optionsdialoge sein. Für die Fehleranalyse gibt es heutzutage in der Regel eine so genannte cross reference, d.h. es wird dem Projekteur angezeigt, wo ein bestimmtes Element überall verwendet wird. Eine schnelle semantische Prüfung ist jedoch auch hier sehr umständlich.

Die Aufgabe der vorliegenden Erfindung besteht darin, eine Vorrichtung anzugeben, welche einem Projekteur die Projektierung einer Bedienoberfläche durch Anzeige der Verbindungen der zu projektierenden Komponenten erleichtert.

Die Aufgabe wird gelöst durch eine Vorrichtung zur Projektierung einer Bedienoberfläche, insbesondere einer Mensch-Maschine-Schnittstelle einer Automatisierungskomponente, mit Eingabemitteln zur Positionierung mindestens einer Visualisierungs- und/oder Eingabekomponente auf der zu projektierenden Bedienoberfläche und Anzeigemitteln zur Darstellung von Datenverbindungen der mindestens einen Visualisierungs- und/oder Eingabekomponente zu Datengebern und/oder Datennehmern der Visualisierungs- und/oder Eingabekomponente der zu projektierenden Bedienoberfläche.

Der Erfindung liegt die Erkenntnis zugrunde, dass die zusätzlich zu den bisher vorhandenen schirmbasierten Ansichten zur Verfügung gestellte Datenfluss-Sicht die Arbeit des Projekteurs enorm erleichtert. Die Datenfluss-Sicht, welche die Datenverbindungen zwischen der vom Projekteur auf der Bildschirmoberfläche positionierten Visualisierungs- bzw. Eingabekomponente mit ihren "Kommunikationspartnern" also den Elementen, mit denen sie Daten austauscht, darstellt, bietet dem Projekteur eine schnelle Übersicht, woher die Daten und Werte kommen und wohin sie sich bewegen bzw. welche Schnittstellen überhaupt bedient werden müssen. Durch die Datenfluss-Sicht kann der Projekteur genau sehen, welche Datenverbindungen zwischen seiner geradezu projektierenden Komponente und sämtlichen anderen Elementen des Systems bestehen. Eine einfache Übersicht über die Datenflüsse ist somit gegeben, und der Projekteur muss nicht die einzelnen relevanten Elemente, die zur Komponente, welche gerade projektiert wird gehören, aufrufen um dort die entsprechenden Datenverbindungen zu überprüfen. Beispielsweise können zu einer Komponente sämtliche Datenverbindungen zu ihren einzelnen Datenein- und Ausgängen gleichzeitig dargestellt werden. Die Attribute müssen nicht mehr wie bisher in einem Navigationsbaum einzeln ausgewählt werden und die Datenverbindungen überprüft werden.

Durch die zusätzlich bereit gestellte Datenfluss-Sicht kann ein Projekteur bei der Erstellung der Runtime-Software somit gleich überprüfen, ob sämtliche Datenverbindungen, die für das darzustellende Objekt bzw. die Komponente relevant sind auch bestehen. Der Projekteur kann weiterhin überprüfen, ob die entsprechenden Datenverbindungen auch auf die richtigen Zielobjekte zeigen bzw. ob sie von den richtigen Datenquellen ausgehen. Dadurch wird die Arbeit des Projekteurs erheblich erleichtert, was sowohl zu einer Zeit- als auch zu einer Kostenreduktion bei Verwendung eines derartigen Engineering-Systems führt.

Hierdurch wird eine natürlichere Sicht dessen, was ein Projekteur sich erarbeitet erzielt. Auf dem Bediengerät, beispielsweise dem Operator-Panel sind zwar nur die Bilder zu sehen, der schwierige Teil an einer Projektierung ist aber eben die Verknüpfung der Informationen und Aktionen mit diesen Bildern. Die Datenfluss-Sicht ermöglicht es dem Projekteur, diese Verknüpfungen gezielter zu erstellen und leichter zu überblicken. Der Projekteur sieht hinter seinen Bildern bzw. den Komponenten, welche die Bilder darstellen, die existierende Datenflussmodellierung und kann sie einfach und schnell prüfen. Fehler auf der Ebene der Verknüpfung sind wesentlich schneller zu finden, da Informationen in einem Bild zur Verfügung stehen, die man sonst mühsam über verschiedene Attribute eines Objektbaumes zusammensuchen müsste. Die Be- bzw. Erarbeitung der Verknüpfungen geht mit der Datenfluss-Sicht wesentlich schneller, da die erlaubten Verknüpfungen pro Element sehr begrenzt sind und der Datenfluss-Editor die möglichen Verbindungen einfach vorgeben kann. Insgesamt werden durch die Vorrichtung bisher verteilte Informationen übersichtlich zusammengefasst.

Weitere vorteilhafte Ausbildungen der Erfindung sind in den Unteransprüchen angegeben. Insbesondere kann aus einer Library mit Hilfe von Auswahlmitteln eine Visualisierungs- und/oder Eingabekomponente selektiert werden. Weiterhin sind die Anzeigemittel, welche die Datenfluss-Sicht der projektierten Runtime-Software anzeigen, ein- bzw. ausschaltbar. Ebenso sind einzelne, durch die Anzeigemittel dargestellte Datenverbindungen zwischen den Komponenten und Datengebern und/oder Datennehmern ein- oder ausschaltbar. Hierdurch kann vom Projekteur eine mehr oder weniger komplizierte Darstellung der jeweiligen Verbindungen ausgewählt werden. Desgleichen kann die Analyse-Tiefe der Datenfluss-Sicht erhöht bzw. erniedrigt werden, d.h. es können unterschiedliche Verknüpfungsstufen bzw. eine unterschiedliche Kettenlänge von Verknüpfungen zwischen verschiedenen Elementen ausgewählt werden. Desgleichen kann von beliebigen Visualisierungs- bzw. Eingabekomponenten ausgehend die Datenfluss-Sicht angezeigt werden. Die jeweils selektierte Visualisierungs- und/oder Eingabekomponente steht in diesem Fall im Mittelpunkt der Darstellung und alle eingehenden bzw. ausgehenden Datenverbindungen werden zentralisiert auf die ausgewählte Komponente angezeigt.

Weiterhin können einzelne Visualisierungs- und/oder Eingabekomponenten ein- und ausgeblendet werden. Dies ermöglicht dem Projekteur ebenfalls wieder die Darstellung der projektierten Bedienoberfläche mit unterschiedlicher Komplexität.

Im Folgenden wird die Erfindung anhand der in den Figuren dargestellten Ausführungsbeispiele näher beschrieben und erläutert. Es zeigen:
- FIG 1: ein gängiges Engineering-System mit Sicht auf einen zu projektierenden Bildschirm,
- FIG 2: ein Engineering-System mit Datenfluss-Sicht,
- FIG 3: Engineering-System mit Datenfluss-Sicht über verschiedene Stufen,
- FIG 4: Datenfluss-Sicht mit Focus auf unterschiedliche Komponenten,
- FIG 5: Datenfluss-Sicht mit Attributdarstellung,
- FIG 6: Engineering-System mit bisher nicht verknüpfter Komponente,
- FIG 7: Engineering-System mit bisher nicht verknüpfter Komponente im ersten Arbeitsschritt,
- FIG 8: Engineering-System mit bisher nicht verknüpfter Komponente im zweiten Arbeitsschritt,
- FIG 9: Engineering-System mit verknüpfter Komponente.

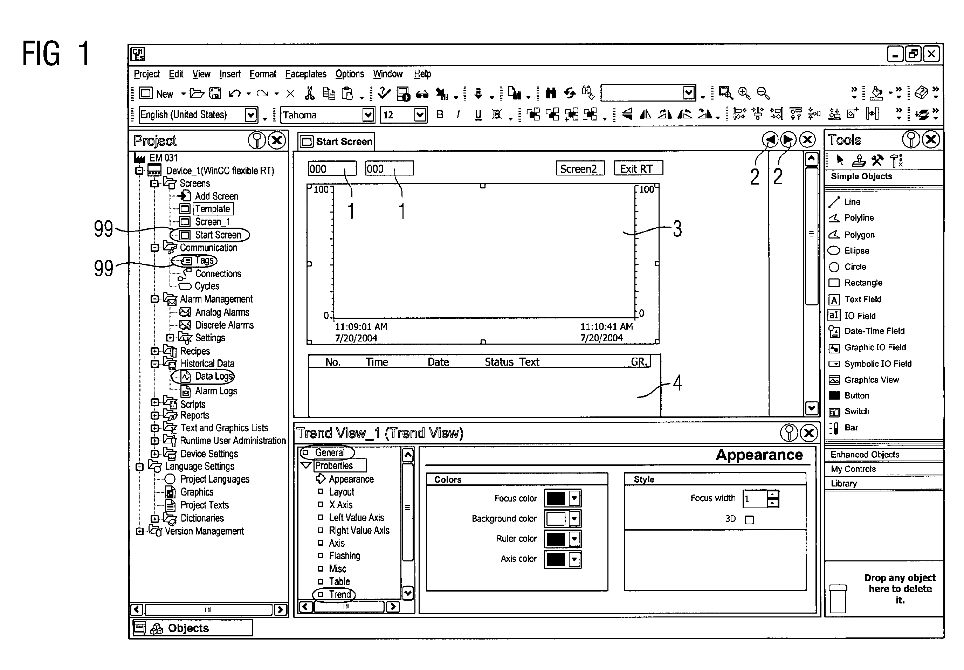

FIG 1 zeigt als Stand der Technik ein typisches Engineering-System für Automatisierungs-Systeme mit der Sicht auf einen beispielhaften Screen. Der Screen enthält in diesem Fall zwei Ein-/Ausgabe-Felder zur Datenanzeige und -eingabe 1. Der Bildschirm enthält weiterhin zwei Buttons zur Navigation 2 sowie einen Kurven-View 3 (Trend View) zur grafischen Messwertanzeige. Weiterhin enthält der Schirm einen Melde View 4 zur Anzeige von Meldungen des Systems an den Benutzer. Um die Verknüpfungen dieser Elemente 1, 2, 3 und 4 zu überprüfen, müsste der Projekteur die in der FIG 1 markierten Elemente 99 aktivieren und zusätzlich für jedes Element dort weitere Attribute selektieren, wie es beispielhaft für den Trend View in seinem Attribut-Panel 5 ebenfalls markiert wurde. Im dargestellten Beispiel sind die Hervorhebungen im Projektbaum durch das relative einfache Beispiel ziemlich begrenzt. Theoretisch könnte es nötig sein, jedes der im Projektbaum dargestellten Elemente zu aktivieren und dessen Inhalte zu untersuchen.

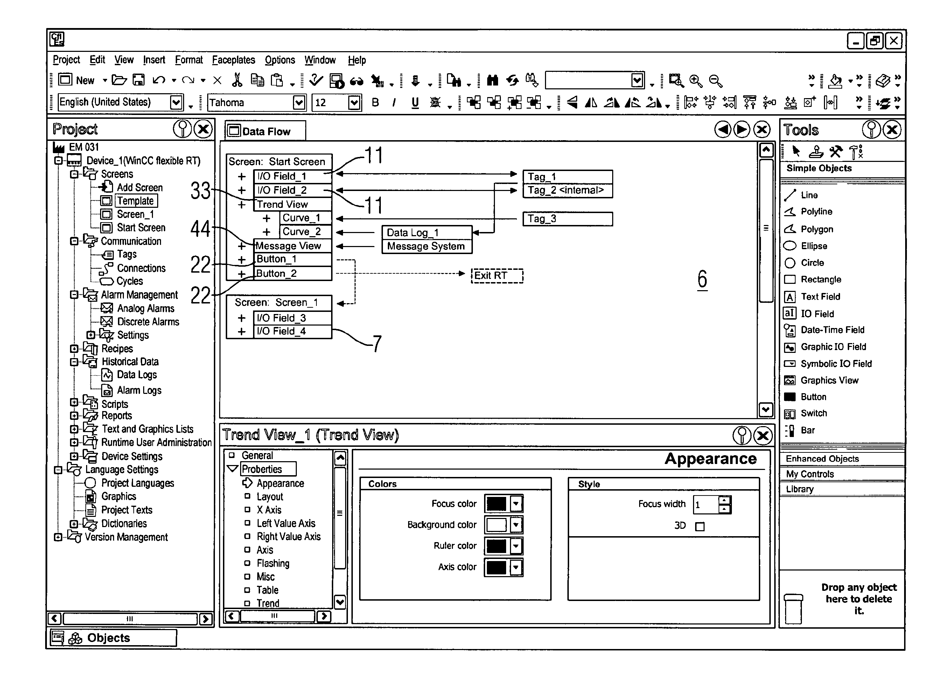

FIG 2 zeigt die erfindungsgemäße Vorrichtung, in der im Rahmen des Engineering-Systems eine Datenfluss-Sicht 6 für die beispielhafte Projektierung mit Fokus auf den Bildschirm angezeigt wird. Hierbei wird der Startbildschirm mit den zwei Eingabefeldern 11, den Navigationsbuttons 22, dem Trend View 33 sowie dem Melde View 44 als eine Komponente mit verschiedenen Datenein- und -ausgängen dargestellt. Im ersten Schritt werden hierbei nur die direkten Verbindungen zu dieser Komponente Startbildschirm angezeigt. Hierbei ist der Startpunkt das Objekt "Startscreen". Die Datenverbindungen besitzen hierbei durchgezogene Linien. Neben den Datenverbindungen sind Navigationsmöglichkeiten, beispielsweise zu einem zweiten Bildschirm screen_1 7 gestrichelt dargestellt.

Die Pfeile geben bei den Datenverbindungen die Datenflussrichtung - also ob es sich um Datennehmer oder Datengeber oder beides handelt an. Beispielsweise ist das Eingabefeld 1 mit dem Tag_1 verbunden und bekommt hierüber seine Werte. Der gleiche Wert wird gleichzeitig im Trend View 33 mit Hilfe einer Kurve dargestellt. In der Datenfluss-Sicht ist ebenso leicht erkennbar, dass im Trend View 33 eine weitere Kurve dargestellt wird, die ihren Wert vom Tag_3 erhält. Die beiden Navigationsbuttons 22 sind jeweils durch gestrichelte Linien mit dem Zielort, an den sie führen, verbunden.

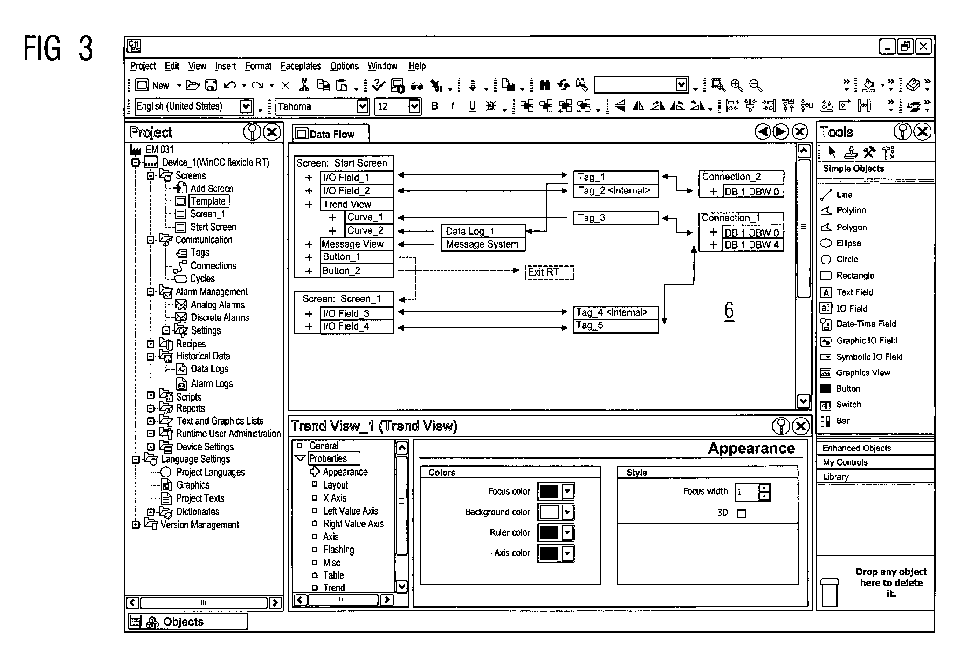

FIG 3 stellt ebenfalls die Datenfluss-Sicht 6 des Engineering-Systems dar. Hierbei ist jedoch die Analysetiefe gegenüber FIG 2 um eine Stufe erweitert. D. h. es werden ausgehend von der Komponente "Startscreen" auch alle Verbindungen mit einem Abstand von "zwei" angezeigt. Hierbei handelt es sich um Verbindungen, die nicht direkt, sondern über ein weiteres Element mit der Komponente Startscreen verbunden sind. Beispielsweise erhält Tag_1 seinen Wert über die Verbindung Connection_2, welche einen Wert eines Feldgeräts liefert.

Im Rahmen der Darstellung kann zur vereinfachten Visualisierung beispielsweise auch ein Subnetz, welches einen zusammenhängenden Pfad darstellt in einer bestimmten Farbe dargestellt werden. Bei unübersichtlichen Datenfluss-Sichten kann dies zu einer besseren Übersichtlichkeit führen und dem Anwender erleichtern, den entsprechenden Weg im Diagramm zu verfolgen.

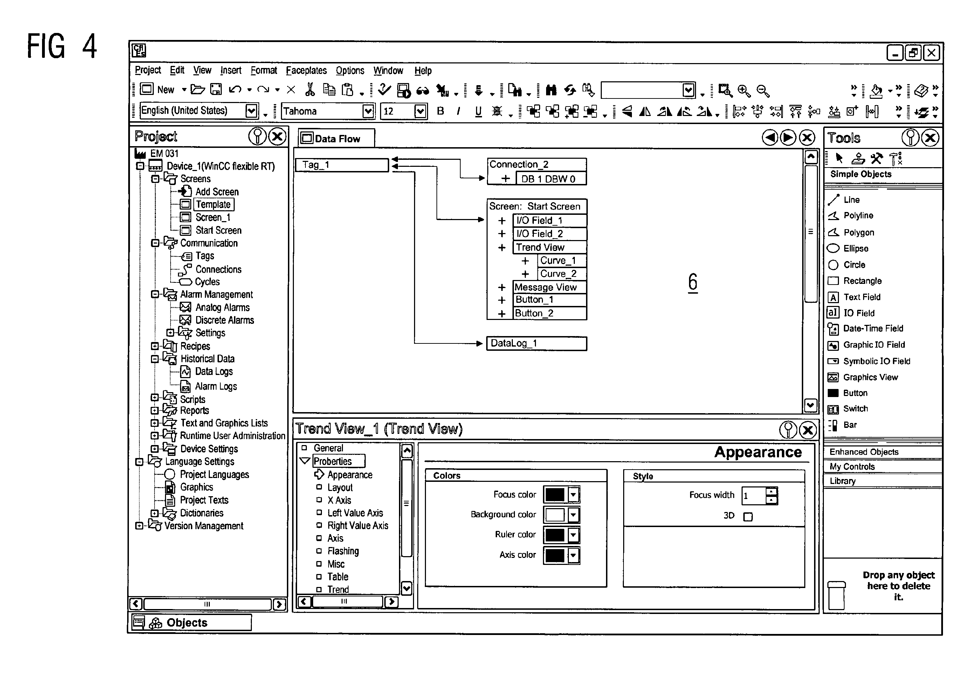

In FIG 4 ist die Datenfluss-Sicht 6 des Engineering-Systems dargestellt. In der FIG 4 ist im Gegensatz zu FIGS 2 und 3 der Tag_1 das zentrale Element der Darstellung. In diesem Fall sind ausgehend von Tag_1 ausschließlich die Verbindungen dargestellt, die von Tag_1 ausgehen oder zu Tag_1 hinführen. Somit ist dargestellt, das Tag 1 eine Verbindung zur Connection_2 hat und eine Verbindung zu einem der Eingabefelder 1 des "Startscreens". Ebenso ist dargestellt, dass Tag 1 eine Verbindung zu Datalog_1 aufweist. Die Änderung der Sicht kann beispielsweise durch einen Doppelklick auf Tag_1 herbeigeführt werden. Dadurch wechselt der primäre Fokus von der Komponente Startscreen auf die Variable Tag_1. Statt der Verbindungen zu Startscreen werden jetzt direkt die Verbindungen zu Tag_1 angezeigt. Auch in dieser Sicht könnte man entsprechend der in FIG 3 dargestellten Datenfluss-Sicht 6 eine Erweiterung der Verbindungstiefe bzw. der Verknüpfungen anzeigen lassen, welche über die direkte Verbindung mit der jeweiligen Komponente hinausgehen.

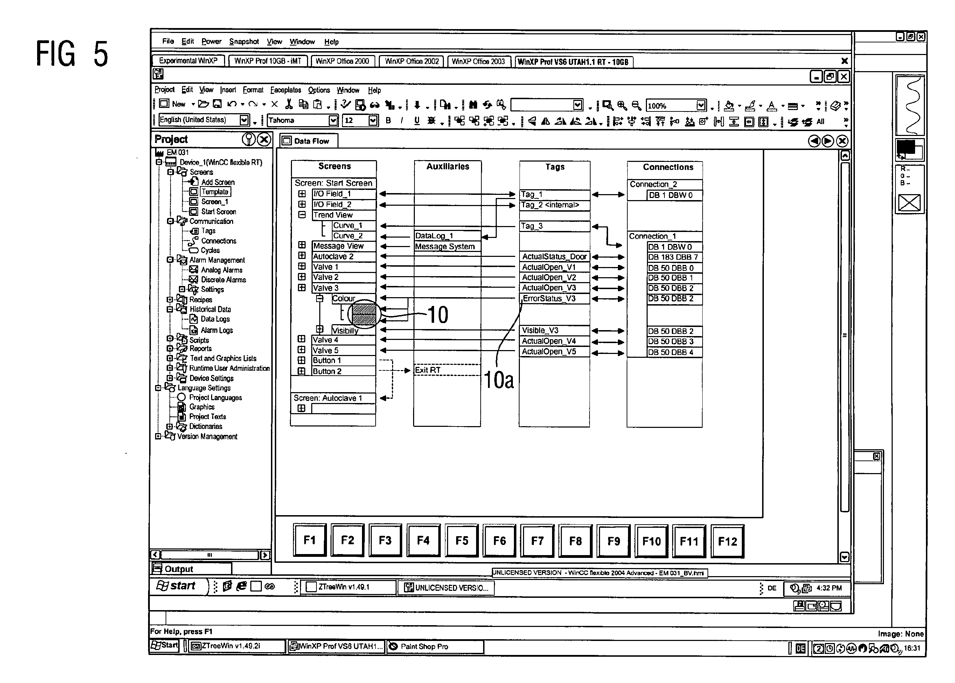

FIG 5 zeigt die Datenfluss-Sicht 6 des Engineering-Systems mit einer weiteren Funktion. Hierbei werden zu einer darzustellenden Komponente, beispielsweise Valve_3 weitere Attribute 10, insbesondere dynamische Attribute, zur zusätzlichen Informationsdarstellung angezeigt. Diese Attribute, beispielsweise Sichtbarkeit, Farbe der Darstellung, Blinke, Position des Elements, können in Rahmen der erfindungsgemäßen Vorrichtung ebenfalls mit Variablen 10a, also Datengebern und Datennehmern verbunden werden. Diese Verbindungen werden dann in der Datenfluss-Sicht ebenfalls angezeigt. Beispielsweise kann die zusätzliche Variable 10a als Datengeber für einen Fehlerfall genutzt werden und die Komponente, in diesem Fall Valve_3 bei Vorliegen eines Fehlers rot und ansonsten grün einfärben.

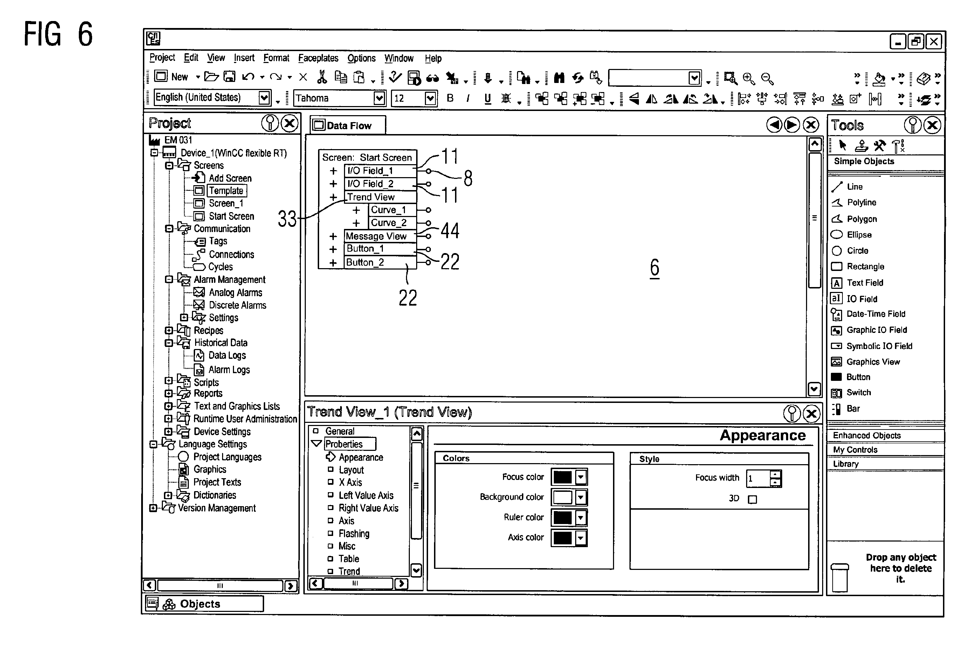

FIG 6 zeigt beispielhaft, wie ein Projekteur mit der Vorrichtung arbeiten kann. Hierbei wird in der Datenfluss-Sicht 6 eine Komponente, welche bereits auf dem Bildschirm platziert aber noch nicht verknüpft ist, dargestellt. Die Komponente weist ihre einzelnen Elemente, beispielsweise Eingabefelder 11, Navigationsbuttons 22, Trend View 33 und Message View 44 auf. Die Verknüpfungen sind jedoch noch nicht erstellt und somit sind die fehlenden Verknüpfungen durch spezielle Symbole, in diesem Fall ein nicht ausgefüllter Kreis 8 repräsentiert.

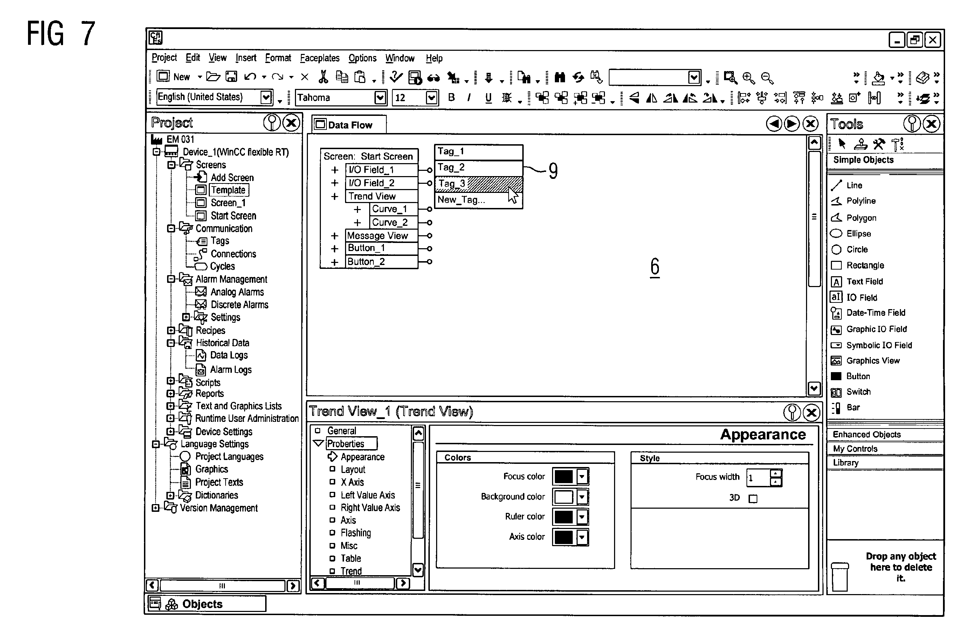

FIG 7 zeigt den nächsten Schritt in der Arbeit mit der erfindungsgemäßen Vorrichtung. Beispielsweise soll im Fenster Trend View 33 ausgehend von Curve_1 eine Verbindung zu einem Tag hergestellt werden. Dazu listet die Vorrichtung bzw. das Engineering-System in der Datenfluss-Sicht 6 nun die möglichen Variablen auf, deren Typ eine sinnvolle Verknüpfung mit dieser Kurve des Trend View 33 darstellen würde. Die Auflistung erfolgt in einer Liste 9. Aus dieser Liste 9 kann das gewünscht Element bzw. die Variable, in diesem Fall Tag_3 selektiert werden.

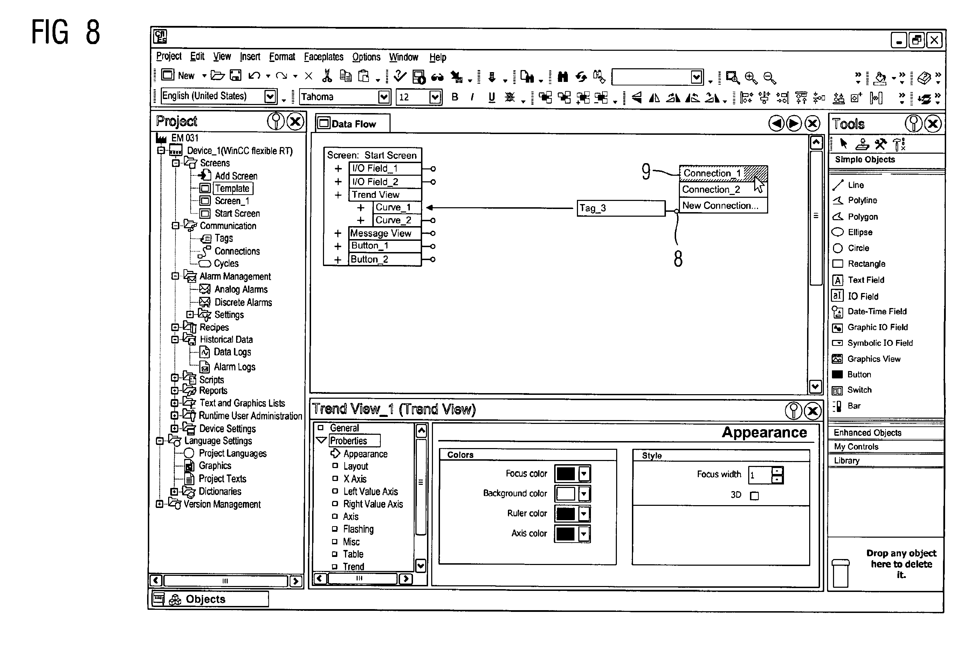

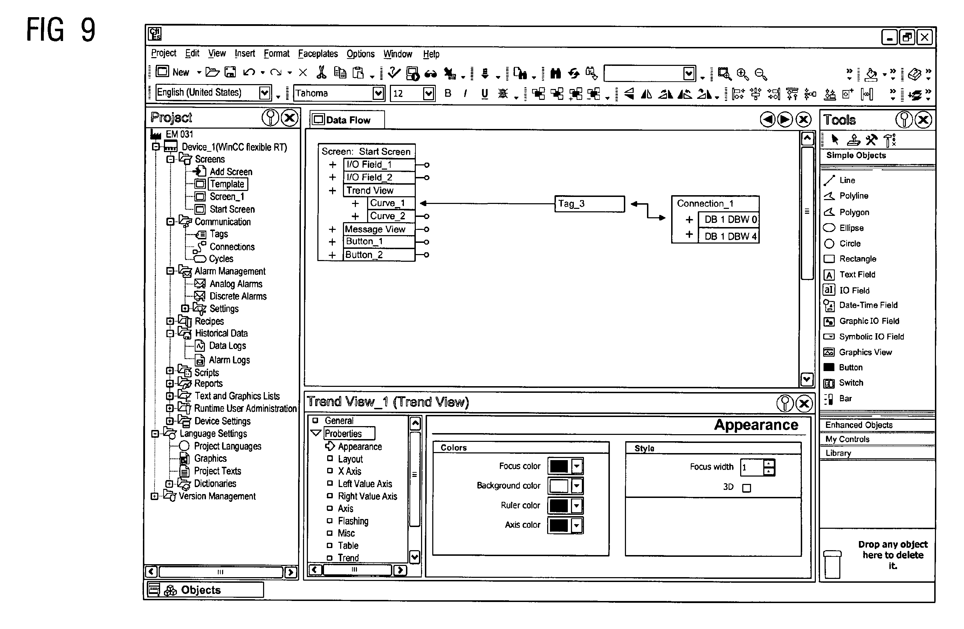

FIG 8 stellt den nächsten Schritt der Projektierung dar. Die verknüpfte Variable Tag_3 ist noch nicht mit einer Steuerung verbunden. Aus diesem Grund zeigt die Vorrichtung am Eingang von Tag_3 ebenfalls an, dass eine Verbindung fehlt. Dies erfolgt beispielhaft wieder durch einen nicht befüllten Kreis 8. In der Datenfluss-Sicht 6 wird an den nicht verknüpften Verbindungen ebenfalls wieder eine Liste mit den möglichen Datenverbindungen angegeben. Hierbei erlaubt das System die Auswahl aus zwei bisher projektierten Steuerungen oder die Neuanlage einer entsprechenden Verbindung. Nach Auswahl der möglichen Optionen aus der Liste 9 ist die Verbindung fertig gestellt. Die gewünschte Verkettung zwischen der anzuzeigenden Kurve im Trend View und dem notwendigen Messwert bzw. den notwendigen Daten ist fertig (FIG 9).

## Patentansprüche

1. Vorrichtung zur Projektierung einer Bedienoberfläche, insbesondere einer Mensch-Maschine-Schnittstelle einer Automatisierungskomponente, mit
• Eingabemitteln zur Positionierung mindestens einer Visualisierungs- und/oder Eingabekomponente (1, 2, 3, 4, 11, 22, 33, 44) auf der zu projektierenden Bedienoberfläche und
• Anzeigemitteln (6) zur Darstellung von Datenverbindungen der mindestens einen Visualisierungs- und/oder Eingabekomponente (1, 2, 3, 4, 11, 22, 33, 44) zu Datengebern und/oder Datennehmern der Visualisierungs- und/oder Eingabekomponente der zu projektierenden Bedienoberfläche.

2. Vorrichtung nach Anspruch 1, wobei Auswahlmittel zur Selektion mindestens einer Visualisierungs- und/oder Eingabekomponente vorgesehen sind.

3. Vorrichtung nach Anspruch 1 oder 2, wobei die Anzeigemittel ein- und/oder ausschaltbar sind.

4. Vorrichtung nach einem der Ansprüche 1 bis 3, wobei mindestens eine durch die Anzeigemittel dargestellte Datenverbindung ein- und/oder ausschaltbar ist.

5. Vorrichtung nach einem der Ansprüche 1 bis 4, wobei die Anzeigemittel zur Darstellung mehrerer Sichten auf die Visualisierungs- und/oder Eingabekomponenten vorgesehen sind, wobei jede positionierte Komponente als zentrales Element für die Darstellung der Datenverbindungen auswählbar ist.

6. Vorrichtung nach einem der Ansprüche 1 bis 5, wobei jede in den Anzeigemitteln dargestellte Visualisierungs- und/oder Eingabekomponente ein- und/oder ausblendbar ist.

7. Vorrichtung nach einem der Ansprüche 1 bis 6, wobei die Anzeigemittel zur Darstellung einer und/oder mehrerer Stufen von Datenverbindungen vorgesehen sind.

8. Vorrichtung nach einem der Ansprüche 1 bis 7, wobei insbesondere dynamische Attribute zur detaillierten Informationsbereitstellung zu den Visualisierungskomponenten vorgesehen sind, wobei die Attribute zur Verknüpfung mit Datennehmern und/oder Datengebern vorgesehen sind.

9. Verfahren zur Projektierung einer Bedienoberfläche, insbesondere einer Mensch-Maschine-Schnittstelle einer Automatisierungskomponente, bei dem
• mindestens eine Visualisierungs- und/oder Eingabekomponente (1, 2, 3, 4, 11, 22, 33, 44) auf der zu projektierenden Bedienoberfläche positioniert wird und
• Datenverbindungen der mindestens einen Visualisierungs- und/oder Eingabekomponente (1, 2, 3, 4, 11, 22, 33, 44) zu Datennehmern und/oder Datengebern der Visualisierungs- und/oder Eingabekomponente der zu projektierenden Bedienoberfläche dargestellt werden.

10. Verfahren nach Anspruch 9, bei dem mindestens eine Visualisierungs- und/oder Eingabekomponente selektiert wird.

11. Verfahren nach Anspruch 9 oder 10, bei dem Anzeigemittel zur Darstellung der Datenverbindung ein- und/oder ausgeschaltet werden.

12. Verfahren nach einem der Ansprüche 9 bis 11, bei dem mindestens eine dargestellte Datenverbindung ein- und/oder ausgeschaltet wird.

13. Verfahren nach einem der Ansprüche 9 bis 12, bei dem mehrere Sichten auf die Visualisierungs- und/oder Eingabekomponenten dargestellt werden, wobei jede positionierte Komponente als zentrales Element für die Darstellung der Datenverbindungen ausgewählt wird.

14. Verfahren nach einem der Ansprüche 9 bis 13, bei dem jede in den Anzeigemitteln dargestellte Visualisierungs- und/oder Eingabekomponente ein- und/oder ausgeblendet wird.

15. Verfahren nach einem der Ansprüche 9 bis 14, bei dem eine und/oder mehrere Stufen von Datenverbindungen dargestellt werden.

16. Verfahren nach einem der Ansprüche 9 bis 15, wobei detaillierte Information zu den Visualisierungskomponenten durch insbesondere dynamische Attribute dargestellt wird, wobei die Attribute mit Datennehmern und/oder Datengebern verknüpft sind.
